Europäisches Patentamt

European Patent Office ·

Office européen des brevets

(19)

(11) Veröffentlichungsnummer: **0 028 818**
B1

(12) **EUROPÄISCHE PATENTSCHRIFT**

(45) Veröffentlichungstag der Patentschrift:
02.02.83

(21) Anmeldenummer: 80106859.4

(22) Anmeldetag: 07.11.80

(51) Int. Cl.³: **A 01 N 25/18,** A 01 N 31/06 //
(A01N31/06, 31/02, 27/00)

(54) Verfahren zur Bekämpfung von Pflanzenschädlingen mit Pheromonen und Vorrichtung für die Abgabe dieser Pheromone.

(30) Priorität: 12.11.79 DE 2945655

(43) Veröffentlichungstag der Anmeldung:
20.05.81 Patentblatt 81/20

(45) Bekanntmachung des Hinweises auf die Patenterteilung:
02.02.83 Patentblatt 83/5

(84) Benannte Vertragsstaaten:
AT BE CH DE FR GB IT LI LU NL SE

(56) Entgegenhaltungen:
DE-A-2 832 248
FR-A-2 377 156
US-A-3 951 622
US-A-4 161 283
,,Journal of Economic Entomology'', Bd. 62,
Nr. 2, April 1969, College Park, Maryland, US,
H. H. Toba *et al.*: ,,A polyethylene bag for dispensing the synthetic sex pheromone of the cabbage
looper'', S. 517, 518.
,,Pesticide Science'', Bd. 9, Nr. 5, 1978, London,
GB, D. G. Campion *et al.*: ,,Controlled release of
pheromones'', S. 434-440.
(73) Patentinhaber: CELAMERCK GmbH & Co. KG, Binger
Strasse 173, D-6507 Ingelheim am Rhein (DE)

(72) Erfinder: Kauth, Hans Herbert, Dr., Gehauweg 14,
D-6507 Ingelheim (DE)
Erfinder: Darskus, Rolf Ludwig, Dr., Im Brühl 1,
D-6535 Gau-Algesheim (DE)
Erfinder: Vité, Jean Pierre, Dr., Sofienstrasse 13,
D-7630 Lahr (DE)

Verfahren zur Bekämpfung von Pflanzenschädlingen mit Pheromonen und Vorrichtung für die Abgabe dieser Pheromone

Die Erfindung betrifft eine Vorrichtung für die Abgabe von Pheromonen, bei der die Abgaberate von den Umweltbedingungen weit weniger stark abhängt als bei vorbeschriebenen Applikationsformen.

Pheromone haben in neuerer Zeit für die Anlokkung und Bekämpfung von Forstschädlingen Bedeutung erlangt. Es ist bekannt, für diesen Zweck poröse Träger mit flüssigen bzw. gelösten Pheromonen zu tränken und die Träger dann in Beutel aus dünnen Kunststoffolien einzuschliessen. Auf diese Weise wird eine langsame Pheromonabgabe erreicht (DE-OS Nr. 2832248). Es ist auch schon beschrieben worden, eine Mischung aus Sand und einer Pheromonlösung in Polyäthylenbeutel einzusiegeln [,,J. Economic Entomology", *62*, S. 517-518 (1969)].

Ferner ist bekannt, Pheromone in pastenartigen Zubereitungen anzuwenden.

Wie sich jedoch gezeigt hat, weisen beide Anwendungsformen Nachteile auf. Die Pasten sind schon unter normalen Bedingungen verhältnismässig rasch erschöpft, während die Beutel bei ungünstigen Umweltbedingungen nicht ausreichend lange wirksam sind.

Solche ungünstigen Bedingungen finden sich häufig gerade an Stellen, wo eine lange Wirkungsdauer zuverlässig erreicht werden muss. Dies sind der Rand des Forstes oder freie Flächen unmittelbar davor, wo die Zubereitungen besonders stark der Wärme (Sonnenbestrahlung) und dem Wind ausgesetzt sind. Auch in manchen Fallen, z.B. in Fensterfallen, kommt es zu starker Erwärmung und damit zu frühzeitiger Erschöpfung der Zubereitungen.

Überraschenderweise wurde nun gefunden, dass die Kombination der beiden Applikationsformen ein unerwartet günstiges Pheromonabgabeverhalten zeigt.

Werden die Pheromone, in übliche Pastengrundlage eingearbeitet, in normaler Dosierung in allseits verschlossene Beutel aus Kunststoffolie gegeben, so wird eine besonders lange anhaltende Abgabe der Pheromone in ausreichenden Mengen ermöglicht. Die Abhängigkeit von Umwelteinflüssen, insbesondere von der Temperatur, wird unvorhersehbar stark verringert.

Gegenstand der Erfindung ist daher eine Vorrichtung für die langfristige gleichmässige Abgabe von Pheromonen, die dadurch gekennzeichnet ist, dass sie aus einem allseits geschlossenen Beutel aus Kunststoffolie besteht, der das oder die Pheromone als pastenartige bis halbfeste Zubereitung enthält.

Während bei den DE-OS Nr. 2832248 die Pheromonformulierung nur zu einem geringen Teil mit der Beutelwandung in unmittelbarem Kontakt steht, bedeckt bei der erfindungsgemässen Vorrichtung die Formulierung einen wesentlichen Teil der Innenwand des Beutels. Die Verflüssigung der Paste bei hohen Temperaturen (d.h. oberhalb ca. 45-50°C) wirkt sich nicht notwendig negativ aus. Bevorzugt wird jedoch die Pastenbasis so gewählt (Verwendung beispielsweise von Polyäthylenglykol 4000 bzw. 6000, Erstarrungsbereich 54-58°C bzw. 56-63°C), dass auch bei den höchsten Temperaturen, die in der Praxis vorkommen, keine Verflüssigung eintritt, um Entmischung zu verhindern.

Die gemäss der vorliegenden Erfindung verwendbaren Kunststoffbeutel können aus Polyvinylchlorid, Polyamiden, Polyvinylidenchlorid und vor allem Polyäthylen bestehen. Sie haben eine Dicke von 20 µm bis 1 mm, vorzugsweise 20 bis 200 µm, insbesondere 40 bis 100 µm. Auch übliche Verbundfolien, z.B. auf der Basis Zellulose/Polyvinylidenchlorid oder Polyvinylidenchlorid/Polyvinylchlorid, sind verwendbar. Zweckmässig werden die Beutel aus Abschnitten von Schläuchen aus den genannten Folien hergestellt und an zwei Seiten zugeschweisst. Die Oberfläche der Beutel beträgt zwischen 80 und 320 cm².

Um eine individuelle Pheromondosierung vorzunehmen, können Beutel mit einer üblichen Verschlussleiste bei der Ausbringung mit der Pheromonpaste aus Tuben gefüllt und dann zugedrückt werden.

Als Pastengrundlage eignen sich Mischungen aus Vaseline[®], Polyäthylenglykol (z.B. Lanogen 1500) und kolloidaler Kieselsäure. Als höher schmelzende Bestandteile kommen beispielsweise feste Paraffine, mikrokristalline Wachse oder Alkohole und Harze in Betracht, durch die der Erweichungspunkt/Tropfpunkt variiert werden kann. Die Viskosität kann durch natürliche Harze, Dickungsmittel (Kieselgel, Kaoline, Bentonite, Montmorillonite) oder Weichmacher (Phthalate, Öle) verändert werden. Auch in der Galenik übliche Hilfsstoffe wie Lanolin, Eucerin in Kombination mit Lanettetypen (Fettalkohole, Fettalkoholsulfonate), Stearinsäure, Isopropylmyrisat sowie Tween[®]- und Span[®]-Typen zur Einstellung der Viskosität in Abhängigkeit von der Temperatur sind verwendbar.

Die fertige Paste enthält zwischen 1 und 40 Gewichtsprozent, vorzugsweise 5 bis 30 Gewichtsprozent, Pheromone.

Pheromone, die in der erfindungsgemässen Vorrichtung verwendet werden können, sind z.B.:

Lineatin plus α-Pinen und/oder Äthylalkohol (für *Trypodendron lineatum*),

Multistriatin plus 4-Methyl-3-heptanol plus (−)-α-Cubebeneöl (für *Scolytus multistriatus*),

Frontalin plus α-Pinen/endo-Brevicomin plus Verbenon plus Methylalkohol (Anlockung/Ablenkung von *Dendroctonus frontalis*),

Frontalin plus Seudenol/3-Methyl-2-cyclohexan-1-on (Anlockung/Ablenkung von *Dendroctonus pseudotsugae*),

exo-Brevicomin plus Frontalin mit Myrcen und α-Pinen (für *Dendroctonus adjunctus* und *Dendroctonus brevicomis*),

S-cis-Verbenol plus Methylbutenol plus gegebenenfalls Ipsdienol (für *Ips typographus*),

Ipsenol plus Ipsdienol plus Methylbutenol (für *Ips cembrae*),

Ipsdienol plus cis-Verbenol plus α-Pinen (für *Ips sexdentatus* und *Ips interstitialis*),

Ipsenol (für *Ips grandicollis*),

Amitinol plus α-Pinen plus gegebenenfalls Äthanol (Anlockung von *Ips amitinus*).

Ausser *Scolytus multistriatus*, dem Ulmensplintkäfer, handelt es sich bei den genannten Käfern um Schädlinge in Nadelwäldern, von denen insbesondere die ersten sieben eine grosse wirtschaftliche Bedeutung haben.

Die Anwendung der Erfindung ist jedoch nicht auf die genannten Schädlinge beschränkt. So kann z.B. auch Disparlur für Nonne und Schwammspinner angewendet werden, Dodecenylacetate können so zur Anlockung bzw. Verwitterung des Kiefernknospentriebwicklers, des Eichenwicklers und der Forleule dienen.

Typische Formulierungen, die entsprechend mit anderen Pheromonen hergestellt werden können, sind in den nachstehenden Beispielen angegeben (Zusammensetzungen in Gewichtsprozent):

| I. | 2% S-cis-Verbenol |
| | 18% Methylbutenol |
| | 5% α-Pinen |

| | 40% Lanogen 1500 (Polyäthylenglykol) |
| | 30% Vaseline® |
| | 5% Aerosil 200 (kolloidale Kieselsäure) |
| II. | 2% S-cis-Verbenol |
| | 4% Ipsdienol |
| | 18% Methylbutenol |
| | 5% α-Pinen |

| | 38% Lanogen 1500 |
| | 28% Vaseline® |
| | 5% Aerosil® 200 |
| III. | 3% S-cis-Verbenol |
| | 1% Ipsdienol |
| | 18% Methylbutenol |

| | 42% Lanogen 1500 | |
| oder | 41% Polywachs 5/6000* | |
| | 31% Vaselin® | 32% Lanogen 1500 |
| | 5% Aerosil® 200 | 5% Aerosil® 200 |

\* Polyäthylenglykol 6000

Von den Pasten wurden je ca. 15 g in die Kunststoffolienbeutel gefüllt, so dass ein Beutel ca. 3,3 bis 4,4 g Pheromongemisch enthielt. Die Beutel hatten eine Wandstärke von 60-70 µm und eine Seitenlänge von 6 bis 12 cm.

Die Überlegenheit der erfindungsgemässen Vorrichtung zeigte sich beispielsweise bei der Anwendung in Verbindung mit Fensterfallen in Fichtenkulturen. Dabei wurden am Bestandesrand 5122 Käfer *(Ips typographus)* gefangen gegenüber 394 bei Verwendung des Beutels nach DE-OS Nr. 2832248. Im Bestand war das Verhältnis 7630 gegenüber 3055 mit dem bekannten Beutel.

Die günstigere Abgaberate in Abhängigkeit von der Temperatur zeigte auch der folgende Laborversuch: In einen Polyäthylenbeutel mit 50 µm Wandstärke und einer Oberfläche von ca. 120 cm² wurde ein Schwammtuch mit 1985 mg Methylbutenol, 190 mg S-cis-Verbenol und 553 mg α-Pinen gegeben und zugeschweisst. In einen anderen Beutel derselben Art wurden 10,9 g Paste mit demselben Wirkstoffgehalt gegeben (Pastengrundlage nach Beispiel I) und ebenfalls zugeschweisst. Die Abgaberate aus dem Beutel A, der nur die Pheromonbestandteile enthielt (entsprechend DE-OS Nr. 2832248), und dem Beutel B gemäss der vorliegenden Erfindung, zeigten folgende Werte:

| Beutel | Abgabe bei 45°C | | Abgabe bis 25°C | |
| | (mg MB/h) | (µg ScV/h) | (mg MB/h) | (µg ScV/h) |
|---|---|---|---|---|
| A | 51,6 | 2028 | 2,6 | 35 |
| B | 11,2 | 224 | 2,2 | 47 |

MB = Methylbutenol
ScV = S-cis-Verbenol

Dieser Vergleich zeigt, dass bei 25°C fast die gleichen Substanzmengen freigesetzt werden, dass jedoch bei höherer Temperatur die Abgaberate der erfindungsgemässen Vorrichtung erwünschtermassen deutlich niedriger ist als bei dem bekannten Dispenser.

## Patentansprüche

1. Vorrichtung zur Bekämpfung von Pflanzenschädlingen, insbesondere von Borkenkäfern, dadurch gekennzeichnet, dass sie aus einem allseitig geschlossenen Beutel aus Kunststoffolie mit einer Wandstärke von 20 µm bis 1 mm, vorzugsweise 20 bis 200 µm, mit einer Füllung von pastenförmiger bis halbfester Pheromonzubereitung besteht, wobei die für die verschiedenen Schädlinge bekannten Pheromone in einem Anteil von 1 bis 40 Gewichtsprozent in eine übliche Pastengrundlage eingearbeitet sind.

2. Vorrichtung nach Anspruch 1, dadurch gekennzeichnet, dass die Beuteloberfläche zwischen 80 und 320 cm² beträgt.

3. Verfahren zur Bekämpfung von Pflanzenschädlingen mittels einer Vorrichtung nach einem der beiden Ansprüche 1 oder 2, dadurch gekennzeichnet, dass die Vorrichtung in Verbindung mit Fensterfallen angewendet wird.

4. Verfahren zur Bekämpfung von Pflanzenschädlingen mittels einer Vorrichtung nach einem der beiden Ansprüche 1 oder 2, dadurch gekennzeichnet, dass als Pheromon eine Mischung aus S-cis-Verbenol, Methylbutenol und gegebenenfalls α-Pinen und/oder Ipsdienol verwendet wird.

## Revendications

1. Dispositif pour lutter contre les parasites de plantes, en particulier les bostryches, caractérisé en ce qu'il est constitué d'un sachet fermé de tous côtés, obtenu à partir d'une feuille de matière synthétique ayant une épaisseur de 20 μm à 1 mm, de préférence de 20 à 200 μm, avec un remplissage de préparation à base de phéromones sous forme de pâte jusqu'à semi-solide, dans laquelle les phéromones connues pour les différents parasites sont introduites dans une base pour pâte usuelle en une proportion de 1 à 40% en poids.

2. Dispositif selon la revendication 1, caractérisé en ce que la superficie du sachet est comprise entre 80 et 320 cm².

3. Procédé de lutte contre les parasites de plantes au moyen d'un dispositif selon l'une des revendications 1 ou 2, caractérisé en ce que le dispositif est utilisé en liaison avec des pièges à fenêtre.

4. Procédé de lutte contre les parasites de plantes au moyen d'un dispoitif selon l'une des revendications 1 ou 2, caractérisé en ce que l'on utilise comme phéromone un mélange de S-cis-verbénol, de méthylbuténol et éventuellement d'α-pinène et/ou d'ipsdiénol.

## Claims

1. Apparatus for the control of plant pests, particularly bark beetle, characterized in that it comprises a bag, closed on all sides, of plastic film with a thickness from 20 μm to 1 mm, preferably from 20 to 200 μm, with a paste-like to semisolid pheromone preparation content, whereby the known pheromone for different pests are mixed into a conventional paste base in a proportion from 1 to 40% by weight.

2. Apparatus according to claim 1, characterized in that the surface area of the bag is between 80 and 320 cm².

3. Method for the control of plant pests by means of an apparatus according to claim 1 or 2, characterized in that the apparatus is used in combination with a window trap.

4. Method for the control of plant pests by means of an apparatus according to claim 1 or 2, characterized in that a mixture of S-cis-verbenol, methylbutenol and optionally α-pinene and/or ipsdienol is used as the pheromone.